# EUROPÄISCHE PATENTSCHRIFT

(11) **EP 4 169 772 B1**
(45) Veröffentlichungstag und Bekanntmachung des Hinweises auf die Patenterteilung: **07.01.2026**
(21) Anmeldenummer: 21203332.8
(22) Anmeldetag: 19.10.2021
(51) Int. Cl.: B60Q 1/14, B60Q 1/20, B60Q 1/08

(54) **VERFAHREN UND VORRICHTUNG ZUM STEUERN EINER NEBELLICHTANLAGE**
METHOD AND DEVICE FOR CONTROLLING A FOG LIGHT SYSTEM
PROCÉDÉ ET DISPOSITIF DE COMMANDE D'UNE INSTALLATION DE FEUX ANTIBROUILLARD

(43) Veröffentlichungstag der Anmeldung: 26.04.2023
(73) Patentinhaber: VOLKSWAGEN AG, 38440 Wolfsburg (DE)
(72) Erfinder: Lampe, Sebastian, 49205 Hasbergen (DE); Studeny, Christian, 38170 Schöppenstedt (Eitzum) (DE); Bussius, Annika, 38446 Wolfsburg (DE); Danov, Roman, 30171 Hannover (DE); Günther, Bert, 13589 Berlin (DE); Gutjahr, Karl-Wilhelm, 10781 Berlin (DE); Petermann-Stock, Ina, 38448 Wolfsburg (DE); Roth, Joscha, 30177 Hannover (DE); Thamm, Mathias, 39646 Oebisfelde (DE); Vogler, Sebastian, 38448 Wolfsburg (DE); Weng, Michael, 10559 Berlin (DE)
(74) Vertreter: Meissner Bolte Partnerschaft mbB

(56) Entgegenhaltungen:
- CN-A- 111 114 424
- CN-A- 111 376 820
- CN-A- 111 469 756
- CN-A- 111 660 921
- CN-U- 205 853 987
- DE-A1- 102004 038 425
- DE-A1- 102004 041 429
- DE-A1- 102007 035 553
- DE-A1- 102016 223 232
- DE-A1- 102018 212 506
- DE-A1- 102019 002 667
- DE-A1- 19 636 211
- US-A1- 2004 201 483
- US-A1- 2008 129 206
- US-A1- 2019 094 136
- US-B2- 7 692 535
- CHAABANI HAZAR ET AL: "A Neural network approach to visibility range estimation under foggy weather conditions", PROCEDIA COMPUTER SCIENCE, ELSEVIER, AMSTERDAM, NL, vol. 113, 19 September 2017 (2017-09-19), pages 466 - 471, XP085177111, ISSN: 1877-0509, DOI: 10.1016/J.PROCS.2017.08.304
- MARIO PAVLIC ET AL: "Image based fog detection in vehicles", INTELLIGENT VEHICLES SYMPOSIUM (IV), 2012 IEEE, IEEE, 3 June 2012 (2012-06-03), pages 1132 - 1137, XP032453047, ISBN: 978-1-4673-2119-8, DOI: 10.1109/IVS.2012.6232256

## Beschreibung

Die vorliegende Erfindung betrifft ein Verfahren zum Steuern einer Nebellichtanlage eines Fahrzeugs, bei dem Umgebungsdaten von der Umgebung des Fahrzeugs erfasst werden und mittels der Umgebungsdaten ermittelt wird, ob die Sichtweite unterhalb eines Schwellenwerts liegt, und ob Nebel in der Umgebung des Fahrzeugs ist. Ferner betrifft die Erfindung eine Vorrichtung zum Steuern einer Nebellichtanlage eines Fahrzeugs mit Sensoren zum Erfassen von Umgebungsdaten von der Umgebung des Fahrzeugs und einer Ermittlungseinheit, die eingerichtet ist, mittels der Umgebungsdaten zu ermitteln, ob die Sichtweite unterhalb eines Schwellenwerts liegt und ob Nebel in der Umgebung des Fahrzeugs ist.

Herkömmlicherweise wird die Nebellichtanlage des Fahrzeugs vom Fahrer manuell ein- und ausgeschaltet. Dies führt dazu, dass Nebellichtanlagen häufig entgegen den Vorgaben der Bestimmungen für den Straßenverkehr verwendet werden, nach denen beispielsweise das Einschalten des Nebelschlusslichts ausschließlich bei Nebel und einer Sichtweite unterhalb von 50 m erlaubt ist. Der Nebelscheinwerfer sollte ausschließlich bei schlechten Sichtverhältnissen bedingt durch Wettereinflüsse, wie beispielsweise bei Regen, Nebel oder Schnee, eingeschaltet werden. Bei der manuellen Betätigung der Nebellichtanlage kann es ferner passieren, dass der Fahrer vergisst, die Nebellichtanlage einzuschalten, er sie bei Regen oder Gischt einschaltet, obwohl kein Nebel in der Umgebung des Fahrzeugs ist, und dass die Nebellichtanlage bei leichtem Nebel und einer Sichtweite eingeschaltet wird, die oberhalb von 50 m liegt, oder dass der Fahrer vergisst, die Nebellichtanlage auszuschalten.

Aus der DE 10 2007 035 553 A1 ist eine Schalteinrichtung zum automatischen Ein- und Ausschalten einer Nebelschlussleuchte für ein Fahrzeug bekannt. Die Schalteinrichtung umfasst zwei Sensoren, von denen der eine Sensor die Lichtverhältnisse im vorderen Bereich des Fahrzeugs und der andere die Lichtverhältnisse im hinteren Bereich erfasst. Anhand einer Differenz aus den Lichtverhältnissen im vorderen und hinteren Bereich wird die Nebelschlussleuchte automatisch eingeschaltet oder ausgeschaltet. Durch das Differenzsignal kann die Annäherung eines mit Licht fahrenden Fahrzeugs von hinten erfasst werden, so dass in diesem Fall die Nebelschlussleuchte schnell abgeschaltet werden kann und der Fahrer des anderen Fahrzeugs nicht geblendet wird. Eingeschaltet wird die Nebelschlussleuchte, wenn anhand der Sensoren schlechte Lichtverhältnisse, wie Nebel, Schnee oder starken Regen, identifiziert werden. Nachteilhafterweise wird die Nebelschlussleuchte bei schlechten Sichtverhältnissen auch dann eingeschaltet, wenn diese nicht durch Nebel, sondern beispielsweise durch starken Regen verursacht werden.

Aus der DE 196 36 211 C2 ist eine Fahrzeug-Nebellichtanlage bekannt, die einen Sichtweitensensor zur Bestimmung der Sichtweite aufweist. In Abhängigkeit von dem Signal des Sichtweitensensors wird ein Nebellicht ein- oder ausgeschaltet. Der Sichtweitensensor ist dabei so am Fahrzeug angeordnet, dass sein Erfassungsbereich nach oben ausgerichtet ist.

Das Dokument DE102004041429 Al beschreibt ein Verfahren und eine Vorrichtung zur Steuerung einer Nebelschlussleuchte eines Fahrzeugs, um die Sicherheit und Orientierung für nachfolgende Verkehrsteilnehmer bei schlechten Sichtverhältnissen wie Nebel, starkem Regen oder Schneefall zu verbessern. Das Verfahren ermöglicht sowohl das automatische als auch das manuelle Schalten der Nebelschlussleuchte. Es basiert auf der automatischen Ermittlung eines approximierten Zielschaltzustands der Nebelschlussleuchte anhand von Umgebungs- und/oder Fahrzeugbedingungen sowie externen Daten. Dieser Zustand wird mit dem aktuellen Schaltzustand verknüpft, um die Nebelschlussleuchte entsprechend automatisch ein- oder auszuschalten oder in ihrem Zustand zu belassen. Das Verfahren nutzt künstliche Intelligenz, wie neuronale Netze und/oder Fuzzylogik, zur Ermittlung des approximierten Zielschaltzustands und berücksichtigt dabei auch die Fahrzeuggeschwindigkeit und die Sichtweite als wichtige Parameter. Die Steuerung der Nebelschlussleuchte erhöht die Sicherheit bei schlechten Sichtverhältnissen, indem sie eine automatische Anpassung an die Umgebungsbedingungen ermöglicht.

Der vorliegenden Erfindung liegt die Aufgabe zugrunde, ein Verfahren und eine Vorrichtung der eingangs genannten Art bereitzustellen, bei denen ein Steuersignal zum Einschalten einer Lichtquelle der Nebellichtanlage nur dann erzeugt wird, wenn sichergestellt ist, dass die Voraussetzungen zum Einschalten der Lichtquelle der Nebellichtanlage vorliegen. Hierfür ist es insbesondere wichtig, dass zuverlässig erfasst werden kann, ob Nebel in der Umgebung des Fahrzeugs ist.

Erfindungsgemäß wird diese Aufgabe durch ein Verfahren mit den Merkmalen des Anspruchs 1 und einer Vorrichtung mit den Merkmalen des Anspruchs 7 gelöst. Vorteilhafte Ausgestaltungen und Weiterbildungen ergeben sich aus den abhängigen Ansprüchen.

Das erfindungsgemäße Verfahren ist dadurch gekennzeichnet, dass beim Ermitteln, ob Nebel in der Umgebung des Fahrzeugs ist, ein Verfahren des maschinellen Lernens eingesetzt wird und ein Steuersignal zum Einschalten einer Lichtquelle der Nebellichtanlage erzeugt wird, wenn ermittelt worden ist, dass die Sichtweite unterhalb des Schwellenwerts liegt und dass Nebel in der Umgebung des Fahrzeugs ist. Vorteilhafterweise kann bei dem erfindungsgemäßen Verfahren sichergestellt werden, dass die Lichtquelle der Nebellichtanlage nur dann eingeschaltet wird, wenn sowohl die Sichtweite unterhalb des Schwellenwerts von z. B. 50 m liegt, als auch Nebel in der Umgebung des Fahrzeugs ist. Nur dann sollte die Lichtquelle der Nebellichtanlage eingeschaltet werden. Ferner kann bei dem erfindungsgemäßen Verfahren vorteilhafterweise besonders zuverlässig ermittelt werden, ob sich Nebel in der Umgebung des Fahrzeugs gebildet hat, da hierfür ein Verfahren des maschinellen Lernens eingesetzt wird. Es werden somit Verfahren der künstlichen Intelligenz eingesetzt, um zu ermitteln, ob Nebel in der Umgebung des Fahrzeugs ist. Auf Basis dieser Ermittlung wird dann die Lichtquelle der Nebellichtanlage gesteuert. Mittels künstlicher Intelligenz können somit die Sicht- und Wetterverhältnisse klassifiziert werden. Hierdurch kann die Sichtbarkeit des eigenen Fahrzeugs sowie die Sichtbarkeit anderer Verkehrsteilnehmer zuverlässig ermittelt werden, wodurch die Lichtquelle der Nebellichtanlage zuverlässig angesteuert werden kann.

Gemäß einer vorteilhaften Ausgestaltung des erfindungsgemäßen Verfahrens umfassen die Umgebungsdaten Bilddaten einer Kamera, Messdaten eines LIDAR (Light Detection and Ranging)-Sensors, Messdaten eines Radarsensors, Messdaten eines Ultraschallsensors, Messdaten eines Regensensors, Messdaten eines Lichtsensors, Messdaten eines Temperatursensors, Messdaten eines Luftfeuchtemessers und/oder Messdaten eines Luftdrucksensors. Der Regensensor kann beispielsweise eine optoelektronische Reflektionsmessung bei einer Glasscheibe des Fahrzeugs durchführen. Der Lichtsensor kann die Helligkeit in der Umgebung des Fahrzeugs erfassen. Durch die weiteren Daten können die Umgebungsdaten ein umfassendes Bild in der Umgebung des Fahrzeugs wiedergeben. Hierdurch kann zum einen die Sichtweite in der Umgebung des Fahrzeugs sehr genau bestimmt werden. Ferner ist es durch den Einsatz eines Verfahrens des maschinellen Lernens jedoch auch möglich, sehr zuverlässig zu bestimmen, warum beispielsweise eine geringe Sichtweite vorliegt. Es kann insbesondere durch das Verfahren des maschinellen Lernens sicher unterschieden werden, ob die schlechten Sichtbedingungen durch Nebel oder andere Wettereinflüsse verursacht worden sind. Auf diese Weise können die Umgebungsdaten so klassifiziert werden, dass entschieden werden kann, ob Nebel in der Umgebung des Fahrzeugs ist oder nicht.

Gemäß einer weiteren Ausgestaltung des erfindungsgemäßen Verfahrens werden über eine erste Schnittstelle Wetterdaten für die aktuelle Position des Fahrzeugs empfangen. Die erste Schnittstelle kann beispielsweise eine Telekommunikationsverbindung oder eine DAB (Digital Audio Broadcasting), insbesondere DAB+, Verbindung sein. Die Umgebungsdaten umfassen dann diese Wetterdaten. Anhand der extern ermittelten Wetterdaten kann in Verbindung mit den Messdaten der Sensoren des Fahrzeugs und mittels des Verfahren des maschinellen Lernens noch genauer ermittelt werden, ob Nebel in der Umgebung des Fahrzeugs ist.

Bei der Klassifizierung der Wetterverhältnisse wird insbesondere zwischen Regen, Schnee und Nebel unterschieden. Außerdem kann auch die Sichteinschränkungen verschiedene Klassen eingeteilt werden, zum Beispiel geringe Sicht, moderate Sicht, gute Sicht.

In einer weiteren Ausgestaltung des erfindungsgemäßen Verfahrens werden über eine zweite Schnittstelle externe Daten anderer Verkehrsteilnehmer oder einer Verkehrsinfrastruktur empfangen. Die Umgebungsdaten umfassen dann auch diese externen Daten. Die externen Daten können beispielsweise Daten von den Sensoren anderer Fahrzeuge zusammen mit einer zugehörigen Positionsinformation umfassen. Gleichermaßen können die externen Daten Messdaten von Sensoren einer Verkehrsinfrastruktur zusammen mit der zugehörigen Positionsinformation enthalten. Mittels dieser externen Daten kann noch genauer ermittelt werden, ob in der Umgebung des Fahrzeugs Nebel ist.

Insbesondere kann in diesem Fall ein Abgleich der externen Daten aus dem umgebenden Verkehrsraum, welche von anderen Fahrzeugen und der Verkehrsinfrastruktur empfangen werden, mit den Messdaten der Sensoren des eigenen Fahrzeugs durchgeführt werden. Hierdurch können die Parameter, welche das Verfahren des maschinellen Lernens verwendet, bei der Durchführung des Verfahrens trainiert werden, so dass die von diesem Verfahren bereitgestellte künstliche Intelligenz automatisiert lernt und sich stetig verbessert. Das Training des Parametersatzes für das Maschinenlernverfahren kann dabei innerhalb der Fahrzeugarchitektur oder außerhalb mittels eines Cloud-Backend erfolgen, mit welchem das Fahrzeug über eine Schnittstelle verbunden ist. Die durch das Training verbesserten Parameter können dann wiederum über einen Cloud-Dienst in einer Vielzahl von Fahrzeugen geteilt und verwendet werden.

Die Nebellichtanlage umfasst insbesondere eine Nebelschlussleuchte, welche im hinteren Teil des Fahrzeugs angeordnet ist, und/oder einen oder mehrere Nebelscheinwerfer bzw. ein Schlechtwetterlicht, welche im vorderen Teil des Fahrzeugs angeordnet sind.

Gemäß dem erfindungsgemäßen Verfahren ist das Steuersignal ein erstes Steuersignal zum Einschalten der Lichtquelle eines Nebelschlusslichts der Nebellichtanlage. Das erste Steuersignal wird erzeugt, wenn ermittelt worden ist, dass die Sichtweite unterhalb des Schwellenwerts liegt und Nebel in der Umgebung des Fahrzeugs ist. Auf diese Weise wird das Nebelschlusslicht dann zuverlässig eingeschaltet, wenn die Voraussetzungen hierfür vorliegen und somit andere Verkehrsteilnehmer durch das Einschalten des Nebelschlusslichts nicht geblendet werden.

Gemäß der Erfindung wird mittels der Umgebungsdaten ferner ermittelt, ob die Helligkeit in der Umgebung des Fahrzeugs oberhalb eines Helligkeits-Schwellenwerts für Dunkelheit liegt. Wenn ermittelt worden ist, dass Nebel in der Umgebung des Fahrzeugs ist, und ferner ermittelt worden ist, dass die Helligkeit in der Umgebung des Fahrzeugs oberhalb des Helligkeits-Schwellenwerts liegt, wird ein zweites Steuersignal zum Einschalten der Lichtquellen eines Fahrlichts erzeugt. Durch das Fahrlicht wird beispielsweise eine Abblendlichtfunktion und eine Schlusslichtfunktion bereitgestellt. Tritt somit Nebel bei Tag auf, wird neben der Nebelschlussleuchte automatisiert auch das Fahrlicht eingeschaltet. Die Helligkeit in der Umgebung des Fahrzeugs kann beispielsweise klassifiziert werden, wobei zwischen den Lichtverhältnissen bei Morgengrauen, bei Tageslicht, bei Dämmerung und bei Nacht unterschieden wird.

Gemäß dem erfindungsgemäßen Verfahren wird ferner mittels der Umgebungsdaten ermittelt, ob es in der Umgebung des Fahrzeugs regnet oder schneit. Ferner wird ermittelt, ob die Helligkeit in der Umgebung des Fahrzeugs unterhalb des Helligkeits-Schwellenwerts für Dunkelheit liegt. Wenn ermittelt worden ist, dass Nebel in der Umgebung des Fahrzeugs ist oder dass es regnet oder dass es schneit, und wenn ferner ermittelt worden ist, dass die Helligkeit in der Umgebung des Fahrzeugs unterhalb des Helligkeits-Schwellenwertes liegt, wird ein drittes Steuersignal zum Einschalten der Lichtquelle eines Nebelscheinwerfers des Nebellichtanlage erzeugt. Für das Einschalten des Nebelscheinwerfers werden somit bei diesem Ausführungsbeispiel andere Voraussetzungen zugrunde gelegt, als für das Einschalten des Nebelschlusslichts. Der Nebelscheinwerfer wird auch dann angeschaltet, wenn es bei Dunkelheit regnet oder schneit.

Das Maschinenlernverfahren verwendet insbesondere einen Parametersatz, welcher durch ein Training verbessert werden kann. Hierfür werden Trainingsdaten eingesetzt. Das Training des Parametersatzes erfolgt vor dem Einsatz des Verfahrens; jedoch wird dieses Training auch während des Einsatzes des Verfahrens fortgeführt.

Gemäß einer Ausgestaltung des erfindungsgemäßen Verfahrens werden Bedienhandlungen des Fahrers erfasst und der Parametersatz für das Maschinenlernverfahren, das mittels der erfassten Bedienhandlungen und der Umgebungsdaten, auf deren Basis das Steuersignal erzeugt wird, trainiert. Beispielsweise wird erfasst, wenn innerhalb eines Zeitintervalls nach dem Erzeugen des Steuersignals zum Einschalten der Lichtquelle der Nebellichtanlage manuell ein entgegen gerichtetes Steuersignal zum Ausschalten dieser Lichtquelle erzeugt wird. In diesem Fall wird der Parametersatz für das Maschinenlernverfahren derart trainiert, dass die Umgebungsdaten, auf deren Basis das Steuersignal erzeugt wurde, in Zukunft nicht mehr zum Erzeugen dieses Steuersignals führen. Diese Ausgestaltung des Verfahrens wird insbesondere für die Lichtquelle des Nebelscheinwerfers angewendet. Es erfolgt somit eine automatisierte Verbesserung des Maschinenlernverfahrens, wodurch das Einschalten des Nebelscheinwerfers verbessert erkannt werden kann. Hierbei werden insbesondere solche Bedienhandlungen des Fahrers verwendet, welche Steuerungen rückgängig machen, welche automatisiert von dem Verfahren erzeugt worden sind. Vorteilhafterweise wird hierdurch ein Abgleich mit dem Fahrerwunsch bezüglich des Einschaltens bzw. Nichteinschaltens der Nebelscheinwerfer durchgeführt. Gemäß einer Ausgestaltung findet in diesem Fall ein Training der Funktion entsprechend der Fahrereingaben zur Steigerung der Erkennungsgüte von Nebel nicht statt. Es wir nur gelernt, ob der Fahrer bei schlechter Sicht (Regen, Gischt, Schnee, etc.) mit Nebelscheinwerfern bzw. Schlechtwetterlicht fahren möchte. Auch die Schwelle des Einschalten der Nebelscheinwerfer bzw. des Schlechtwetterlichts kann individuell für einen bestimmten Fahrer gelernt werden.

Insbesondere wird beim Training eines Parametersatzes für das Verfahren des maschinellen Lernens eine mittels des Maschinenlernverfahrens erzeugte Bewertung zum Einschalten des Nebelscheinwerfers mit einer Bewertung verglichen, die mittels der externen Daten der anderen Verkehrsteilnehmer oder der Verkehrsinfrastruktur erzeugt wurde. Auf diese Weise kann vorteilhafterweise die Bewertung für das Einschalten des Nebelscheinwerfers verbessert werden.

Das Training des Parametersatzes kann auf verschiedenen Sensorkombination beruhen. Beispielsweise kann das Training auf der Basis der Sensordaten einer Kamera beruhen. Zum Beispiel basiert das Training auf Basis gelabelter Daten zu unterschiedlichen Fahrsituationen in verschiedenen Wetterverhältnissen. Des Weiteren kann eine bildbasierte Auswertung erfolgen, ob schlechte Sichtverhältnisse (Regen, Gischt, leichter Nebel, Schnee etc.) oder Nebel mit Sichtweiten unterhalb 50 m am Tag oder bei Nacht vorliegen. Auf Basis dieser Sensordaten der Kamera kann eine Steuerung des entsprechenden Lichts, z. B. des Abblendlichts, Nebelscheinwerfers bzw. Schlechtwetterlichts oder der Nebelschlussleuchte, erfolgen. Des Weiteren kann ein Algorithmus das Benutzerverhalten für die Steuerung von Abblendlicht und Nebelscheinwerfern bzw. dem Schlechtwetterlicht, nicht jedoch der Nebelschlussleuchte, maschinell lernen. Dabei kann ein Abgleich der durch die künstliche Intelligenz erzeugten Steuersignale mit der Schaltung durch den Nutzer erfolgen.

Zusätzlich zu den Sensordaten der Kamera können die Sensordaten des Regensensors und/oder des Lichtsensors berücksichtigt werden. Es erfolgt dann ein Training und das Erzeugen des Steuersignals zusätzlich unter Betrachtung der Sensordaten des Regensensors und/oder des Lichtsensors.

Schließlich kann der Parametersatz anhand von Sensordaten eines LIDAR-Sensor trainiert werden. Hierbei kann insbesondere die Sichtweite bzw. die Reichweite des LIDAR-Sensors berücksichtigt werden.

Schließlich können Steuersignale für die Sensordaten des LIDAR-Sensors zur Einschätzung der Wetterverhältnisse verwendet werden.

Das Verfahren zur Nebelerkennung und, vor allem, zur Schätzung der Sichtweite kann fortlaufend trainiert und damit verbessert werden. Dazu wird insbesondere die von der künstliche Intelligenz, d. h. insbesondere des Maschinenlernverfahrens, ermittelte Sichtweite stetig mit den Abstandsinformationen, d. h. zum Beispiel Objektdistanzen, aus der Auswertung anderer Sensoren (z.B. Kamera, LIDAR, Radar und/oder Car2Car) abgeglichen. Werden Objekte von einem optischen Sensor (z.B. Kamera/LIDAR) in einer Entfernung von mehr als 50 m erfasst und wird die Sichtweite durch die künstliche Intelligenz auf weniger als 50 m geschätzt, kann mittels Reinforcement Learning das Verhalten der künstliche Intelligenz entsprechend korrigiert werden.

Die erfindungsgemäße Vorrichtung zum Steuern einer Nebellichtanlage eines Fahrzeugs ist dadurch gekennzeichnet, dass die Vorrichtung eine Steuereinheit aufweist, die eingerichtet ist, ein Steuersignal zum Einschalten einer Lichtquelle der Nebellichtanlage zu erzeugen, wenn ermittelt worden ist, dass die Sichtweite unterhalb des Schwellenwerts liegt und Nebel in der Umgebung des Fahrzeugs ist, und die Ermittlungseinheit mittels eines Verfahrens zum maschinellen Lernens trainiert wurde.

Die erfindungsgemäß Vorrichtung ist zur Ausführung des erfindungsgemäßen Verfahrens geeignet. Sie weist somit auch dieselben Vorteile wie das erfindungsgemäße Verfahren auf.

Die Sensoren der Vorrichtung umfassen insbesondere eine Kamera, einen LIDAR-Sensor, einen Radarsensor, einen Ultraschallsensor, einen Regensensor, einen Lichtsensor, einen Temperatursensor, einen Luftfeuchtemesser und/oder einen Luftdrucksensor. Ferner können die Sensoren außerhalb des Fahrzeugs angeordnet sein und das Fahrzeug mit diesen Sensoren über Schnittstellen verbunden sein. Zu den externen Sensoren gehören beispielsweise Sensoren für Wetterdaten, Sensoren eines anderen Fahrzeugs oder Sensoren einer Verkehrsinfrastruktur.

Ferner kann die Vorrichtung eine externe Ermittlungseinheit umfassen, die über eine Datenschnittstelle mit dem Fahrzeug, sowie mit anderen Fahrzeugen, gekoppelt ist.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Vorrichtung und
- Figur 2: zeigt den Ablauf eines Ausführungsbeispiels des erfindungsgemäßen Verfahrens.

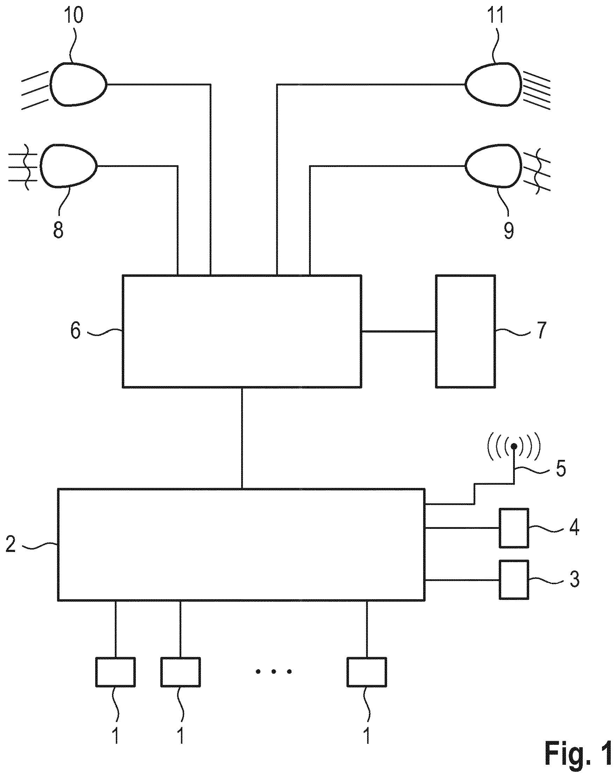

Zunächst wird mit Bezug zu der Fig. 1 ein Ausführungsbeispiel der erfindungsgemäßen Vorrichtung erläutert:
Die Vorrichtung umfasst eine Vielzahl von Sensoren 1, die im Fahrzeug angeordnet sind. Diese können eine Kamera, einen LIDAR-Sensor, einen Radarsensor, einen Ultraschallsensor, einen Regensensor, einen Lichtsensor, einen Temperatursensor, einen Luftfeuchtemesser und/oder einen Luftdrucksensor umfassen. Die von diesen Sensoren 1 erfassten Daten werden an eine Ermittlungseinheit 2 als Umgebungsdaten übertragen.

Ferner weist die Vorrichtung eine erste Schnittstelle 3 auf, über welche der Ermittlungseinheit 2 als weitere Umgebungsdaten Wetterdaten von externen Sensoren übertragen werden. Des Weiteren weist die Vorrichtung eine zweite Schnittstelle 4 auf, über welche der Ermittlungseinheit 2 als weitere Umgebungsdaten externe Daten anderer Verkehrsteilnehmer oder einer Verkehrsinfrastruktur übertragen werden.

Die Ermittlungseinheit 2 ist außerdem mit einem Satellitensignalempfänger, beispielsweise einem GPS-(Global-Positioning-System)-Empfänger verbunden, so dass die aktuelle Position des Fahrzeugs ermittelt werden kann.

Die von der Ermittlungseinheit 2 empfangenen Umgebungsdaten werden von der Ermittlungseinheit 2 weiterverarbeitet. Hierfür umfasst die Ermittlungseinheit 2 eine Einheit, welche ein Verfahren des maschinellen Lernens einsetzt, um zu ermitteln, ob Nebel in der Umgebung des Fahrzeugs ist. Hierfür ist in Ermittlungseinheit 2 ein Parametersatz gespeichert, welcher vorab durch ein Training des Maschinenlernverfahrens erzeugt worden ist.

Des Weiteren ist die Ermittlungseinheit 2 eingerichtet, die Sichtweite in der Umgebung des Fahrzeugs, insbesondere in Sichtrichtung des Fahrers nach vorne zu ermitteln. Insbesondere ist die Ermittlungseinheit 2 eingerichtet festzustellen, ob die Sichtweite unterhalb eines Schwellenwertes liegt. Dieser Schwellenwert ist im hier beschriebenen Ausführungsbeispiel 50 m.

Mit der Ermittlungseinheit 2 ist eine Steuereinheit 6 verbunden. Die Steuereinheit 6 ist mit einer Anzeigeeinheit 7 gekoppelt, welche dem Fahrer Informationen anzeigt. Es kann sich beispielsweise um eine Anzeige im Kombiinstrument des Fahrzeugs oder in der Mittelkonsole handeln. Des Weiteren ist die Steuereinheit 6 mit einer Nebellichtanlage, welche ein Nebelschlusslicht 8 und einen Nebelscheinwerfer 9 umfasst, sowie einem Fahrlicht verbunden, welches ein Rücklicht 10 und einen Fahrscheinwerfer 11 umfasst. Die Steuereinheit ist eingerichtet, Steuersignale für diese Einheiten zu erzeugen. Insbesondere kann die Steuereinheit die Steuersignale zum Ein- und Ausschalten der Lichtquellen des Nebelschlusslichts 8, des Nebelscheinwerfers 9, des Rücklichts 10 und des Fahrscheinwerfers 11 erzeugen. Der Zustand dieser lichttechnischen Einrichtungen kann mittels der Steuereinheit 6 und mittels der Anzeigeeinheiten 7 dem Fahrer angezeigt werden.

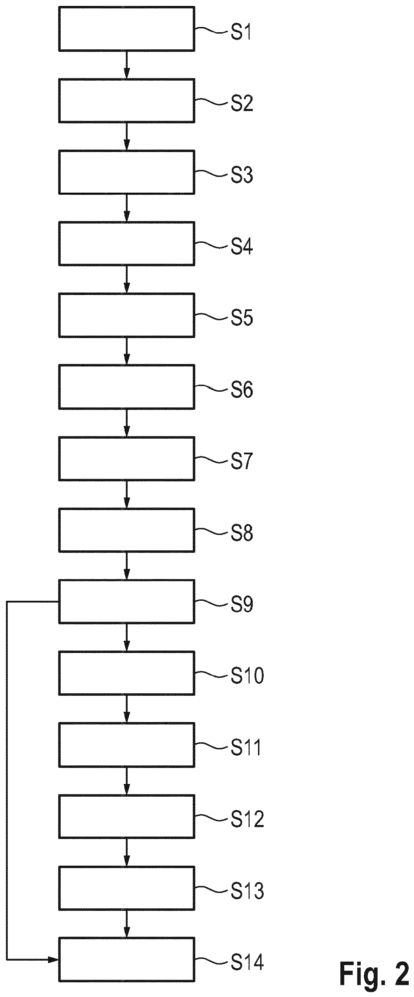

Im Folgenden wird ein Ausführungsbeispiel des erfindungsgemäßen Verfahrens mit Bezug zur Figur 2 erläutert, wobei weitere Details des Ausführungsbeispiels der erfindungsgemäßen Vorrichtung beschrieben werden:
Während der Fahrt mit dem Fahrzeug empfängt die Ermittlungseinheit 2 in einem Schritt S1 Umgebungsdaten der Sensoren 1 sowie der externen Sensoren über die Schnittstellen 3 und 4. Ferner wird mittels des Signals des Sattelitensignalempfängers 5 die Position des Fahrzeugs bestimmt.

In einem Schritt S2 ermittelt die Ermittlungseinheit 2 die Sichtweite in Fahrtrichtung des Fahrzeugs. Hierfür werden insbesondere Messdaten der Sensoren 1 und der externen Daten ausgewertet, welche Rückschlüsse auf die Sichtweite in der Umgebung des Fahrzeugs zulassen.

In einem Schritt S3 ermittelt die Ermittlungseinheit 2, ob Nebel in der Umgebung des Fahrzeugs ist. Hierbei werden nicht nur die Sichtbedingungen berücksichtigt, sondern es wird unterschieden, ob eine geringe Sichtweite durch Nebel oder durch andere Wettereinflüsse, wie beispielsweise Starkregen, Gischt, Schnee, Schneeschleppen, Sandverwirbelungen oder ähnliches bedingt ist. Dabei wird ein Verfahren der künstlichen Intelligenz, insbesondere ein Maschinenlernverfahren, eingesetzt, welches vor der Durchführung des Verfahrens trainiert wurde und welches während der Durchführung des Verfahrens weiter trainiert wird. Das Training des Maschinenlernverfahrens kann von der Ermittlungseinheit 2 durchgeführt werden. Gemäß einem anderen Ausführungsbeispiel wird dieses Training von einem externen Cloud-Backend durchgeführt. Hierfür werden an das Cloud-Backend Daten übertragen, welches einen Parametersatz für das Maschinenlernverfahren danach zurück an das Fahrzeug überträgt. Hierfür wird die zweite Schnittstelle 4 verwendet.

In einem Schritt S4 wird mittels der Umgebungsdaten ferner ermittelt, ob die Helligkeit in der Umgebung des Fahrzeugs oberhalb eines Helligkeits-Schwellenwerts für Dunkelheit liegt. Anhand des Helligkeits-Schwellenwerts wird somit eine Klassifikation durchgeführt, ob es dunkel oder hell ist.

In einem Schritt S5 wird mittels der Umgebungsdaten schließlich ermittelt, ob es in der Umgebung des Fahrzeugs regnet oder schneit. Hierfür werden insbesondere die Messdaten des Regensensors und des Temperatursensors verwendet. Ferner kann auf externe Wetterdaten, die über die erste Schnittstelle 3 übertragen worden sind, zurückgegriffen werden.

In einem Schritt S6 werden die von der Ermittlungseinheit 2 erzeugten Daten an die Steuereinheit 6 übertragen.

In einem Schritt S7 erzeugt die Steuereinheit 6 dann Steuersignale für die lichttechnischen Einrichtungen 8 bis 11:
Ein Steuersignal zum Einschalten der Lichtquelle des Nebelschlusslichts 8 wird erzeugt, wenn ermittelt worden ist, dass die Sichtweite unterhalb des Schwellenwerts liegt und Nebel in der Umgebung des Fahrzeugs ist. Wenn zusätzlich ermittelt worden ist, dass die Helligkeit in der Umgebung des Fahrzeugs oberhalb des Helligkeits-Schwellenwerts liegt, wird außerdem ein Steuersignal zum Einschalten der Lichtquellen des Rücklichts 10 und des Fahrscheinwerfers 11 erzeugt. Es wird insbesondere ein Abblendlicht eingeschaltet.

Wenn hingegen ermittelt worden ist, dass die Helligkeit in der Umgebung des Fahrzeugs unterhalb des Helligkeits-Schwellenwerts liegt, d. h. wenn es dunkel ist, und wenn ferner ermittelt worden ist, dass Nebel in der Umgebung des Fahrzeugs ist oder dass es regnet oder schneit, wird ein Steuersignal zum Einschalten der Lichtquelle des Nebelscheinwerfers 9 erzeugt.

In einem Schritt S8 wird der Zustand der lichttechnischen Einrichtungen 8 bis 11 mittels der Steuereinheit 6 auf einer Anzeigefläche der Anzeigeeinheit 7 angezeigt.

In einem Schritt S9 werden innerhalb eines bestimmten Zeitintervalls, nachdem von der Steuereinheit 6 ein Steuersignal für die lichttechnischen Einrichtungen 8 bis 11 erzeugt worden ist, Bedienhandlungen des Fahrers erfasst, welche sich auf diese lichttechnischen Einrichtungen 7 bis 11 beziehen. Wird keine solchen Bedienhandlung erfasst, wird das Verfahren mit dem Schritt S14 fort.

Wird eine solche Bedienhandlungen erfasst, wird in einem Schritt S10 ermittelt, ob eine manuelle Bedienhandlung des Fahrers ein Steuersignal erzeugt, welches die Wirkung eines Steuersignals aufhebt, welches von der Steuereinheit 6 automatisch erzeugt worden ist.

Wenn erfasst worden ist, dass ein Steuersignal zum Einschalten des Nebelscheinwerfers 9 innerhalb des Zeitintervalls manuell aufgehoben wurde, werden in einem Schritt S11 die Umgebungsdaten ausgelesen, welche dazu geführt haben, dass das aufgehobene Steuersignal erzeugt wurde. Anschließend wird in einem Schritt S12 ein Training des Parametersatzes des Maschinenlernverfahrens durchgeführt, bei dem berücksichtigt wird, dass ein falsches Steuersignal auf Basis des ausgelesenen Umgebungsdaten erzeugt worden ist. Alternativ oder zusätzlich werden beim Training des Parametersatzes externe Daten der anderen Verkehrsteilnehmer oder der Verkehrsinfrastruktur berücksichtigt.

In einem Schritt S13 wird auf Basis dieses Trainings der Parametersatz des Maschinenlernverfahrens verändert, um das Maschinenlernverfahren so zu verbessern, dass diese Umgebungsdaten nicht mehr zu dem falschen Steuersignal führen.

Anschließend wird das Verfahren mit dem Schritt S14 fort, indem wiederum Umgebungsdaten empfangen werden.

### Bezugszeichenliste

- 1: Sensoren
- 2: Ermittlungseinheit
- 3: erste Schnittstelle für Wetterdaten
- 4: zweite Schnittstelle für externe Daten
- 5: Sattelitensignalempfänger
- 6: Steuereinheit
- 7: Anzeigeeinheit
- 8: Nebelschlusslicht
- 9: Nebelscheinwerfer
- 10: Rücklicht
- 11: Fahrscheinwerfer

## Patentansprüche

1. Verfahren zum Steuern einer Nebellichtanlage eines Fahrzeugs, welche ein Nebelschlusslicht (8) und einen Nebelscheinwerfer (9) umfasst, bei dem Umgebungsdaten von der Umgebung des Fahrzeugs erfasst werden und
mittels der Umgebungsdaten ermittelt wird, ob die Sichtweite unterhalb eines Schwellenwert liegt, ob Nebel in der Umgebung des Fahrzeugs ist, ob es in der Umgebung des Fahrzeugs regnet oder schneit und ob die Helligkeit in der Umgebung des Fahrzeugs unterhalb oder oberhalb eines Helligkeits-Schwellenwerts für Dunkelheit liegt,
**dadurch gekennzeichnet, dass**
beim Ermitteln, ob Nebel in Umgebung des Fahrzeugs ist, ein Verfahren des maschinellen Lernens eingesetzt wird, wobei unterschieden wird, ob eine geringe Sichtweite durch Nebel oder durch andere Wettereinflüsse bedingt ist,
ein erstes Steuersignal zum Einschalten einer Lichtquelle des Nebelschlusslichts (8) der Nebellichtanlage nur dann erzeugt wird, wenn ermittelt worden ist, dass die Sichtweite unterhalb des Schwellenwerts liegt und dass Nebel in der Umgebung des Fahrzeugs ist, wenn ermittelt worden ist, dass Nebel in der Umgebung des Fahrzeugs ist, und wenn ferner ermittelt worden ist, dass die Helligkeit in der Umgebung des Fahrzeugs oberhalb des Helligkeits-Schwellenwerts liegt, ein zweites Steuersignal zum Einschalten der Lichtquellen eines Fahrlichts (10, 11) erzeugt wird, und,
wenn ermittelt worden ist, dass Nebel in der Umgebung des Fahrzeugs ist oder dass es regnet oder dass es schneit, und wenn ferner ermittelt worden ist, dass die Helligkeit in der Umgebung des Fahrzeugs unterhalb des Helligkeits-Schwellenwerts liegt, ein drittes Steuersignal zum Einschalten der Lichtquelle des Nebelscheinwerfers (9) der Nebellichtanlage erzeugt wird.

2. Verfahren nach Anspruch 1,
**dadurch gekennzeichnet, dass**
die Umgebungsdaten Bilddaten einer Kamera, Messdaten eines LIDAR-Sensors, Messdaten eines Radarsensors, Messdaten eines Ultraschallsensors, Messdaten eines Regensensors, Messdaten eines Lichtsensors, Messdaten eines Temperatursensors, Messdaten eines Luftfeuchtemessers und/oder Messdaten eines Luftdrucksensors umfassen.

3. Verfahren nach Anspruch 1 oder 2,
**dadurch gekennzeichnet, dass**
über eine erste Schnittstelle (3) Wetterdaten für die aktuelle Position des Fahrzeugs empfangen werden und die Umgebungsdaten diese Wetterdaten umfassen.

4. Verfahren nach einem der vorhergehenden Ansprüche,
**dadurch gekennzeichnet, dass**
über eine zweite Schnittstelle (4) externe Daten anderer Verkehrsteilnehmer oder einer Verkehrsinfrastruktur empfangen werden und die Umgebungsdaten diese externen Daten umfassen.

5. Verfahren nach einem der vorhergehenden Ansprüche,
**dadurch gekennzeichnet, dass**
Bedienhandlungen des Fahrers erfasst werden und
ein Parametersatz für das Verfahren des Maschinenlernverfahren mittels der erfassten Bedienhandlungen und der Umgebungsdaten, auf deren Basis das Steuersignal erzeugt wird, trainiert werden.

6. Verfahren nach Anspruch 5,
**dadurch gekennzeichnet, dass**
beim Training eines Parametersatzes für das Verfahren des maschinellen Lernens eine mittels des Maschinenlernverfahrens erzeugte Bewertung zum Einschalten des Nebelscheinwerfers mit einer Bewertung verglichen wird, die mittels der externen Daten der anderen Verkehrsteilnehmer oder der Verkehrsinfrastruktur erzeugt wurde.

7. Vorrichtung zum Steuern einer Nebellichtanlage eines Fahrzeugs, welche ein Nebelschlusslicht (8) und einen Nebelscheinwerfer (9) umfasst, mit Sensoren (1) zum Erfassen von Umgebungsdaten von der Umgebung des Fahrzeugs und einer Ermittlungseinheit (2), die eingerichtet ist, mittels der Umgebungsdaten zu ermitteln, ob die Sichtweite unterhalb eines Schwellenwert liegt, ob Nebel in der Umgebung des Fahrzeugs ist, ob es in der Umgebung des Fahrzeugs regnet oder schneit und ob die Helligkeit in der Umgebung des Fahrzeugs unterhalb eines Helligkeits-Schwellenwerts für Dunkelheit liegt,
**dadurch gekennzeichnet, dass**
die Vorrichtung eine Steuereinheit (3) aufweist, die eingerichtet ist, ein erstes Steuersignal zum Einschalten einer Lichtquelle des Nebelschlusslichts (8) der Nebellichtanlage nur dann zu erzeugen, wenn ermittelt worden ist, dass die Sichtweite unterhalb des Schwellenwerts liegt und Nebel in der Umgebung des Fahrzeugs ist, wenn ermittelt worden ist, dass Nebel in der Umgebung des Fahrzeugs ist, und wenn ferner ermittelt worden ist, dass die Helligkeit in der Umgebung des Fahrzeugs oberhalb des Helligkeits-Schwellenwerts liegt, ein zweites Steuersignal zum Einschalten der Lichtquellen eines Fahrlichts (10, 11) erzeugt wird, und, wenn ermittelt worden ist, dass Nebel in der Umgebung des Fahrzeugs ist oder dass es regnet oder dass es schneit, und wenn ferner ermittelt worden ist, dass die Helligkeit in der Umgebung des Fahrzeugs unterhalb des Helligkeits-Schwellenwerts liegt, ein drittes Steuersignal zum Einschalten der Lichtquelle des Nebelscheinwerfers (9) der Nebellichtanlage zu erzeugen und
die Ermittlungseinheit (2) mittels eines Verfahrens zum maschinellen Lernen trainiert wurde.

## Claims

1. Method for controlling a fog light system of a vehicle, which comprises a rear fog light (8) and a front fog light (9), in which method environment data from the surroundings of the vehicle are captured and, using the environment data, it is determined whether the visibility is below a threshold value, whether there is fog in the surroundings of the vehicle, whether it is raining or snowing in the surroundings of the vehicle, and whether the brightness in the surroundings of the vehicle is below or above a brightness threshold value for darkness,
**characterized in that,**
when determining whether there is fog in the surroundings of the vehicle, a machine learning process is used, it being distinguished whether low visibility is caused by fog or by other weather influences,
a first control signal for switching on a light source of the rear fog light (8) of the fog light system is generated only if it has been determined that the visibility is below the threshold value and that there is fog in the surroundings of the vehicle, a second control signal for switching on the light sources of a driving light (10, 11) is generated if it has been determined that there is fog in the surroundings of the vehicle and if it has further been determined that the brightness in the surroundings of the vehicle is above the brightness threshold value, and,
a third control signal is generated for switching on the light source of the front fog light (9) of the fog light system if it has been determined that there is fog in the surroundings of the vehicle, or that it is raining or that it is snowing, and if it has further been determined that the brightness in the surroundings of the vehicle is below the brightness threshold value.

2. Method according to claim 1,
**characterized in that**
the environment data comprise image data from a camera, measurement data from a LIDAR sensor, measurement data from a radar sensor, measurement data from an ultrasonic sensor, measurement data from a rain sensor, measurement data from a light sensor, measurement data from a temperature sensor, measurement data from a humidity sensor and/or measurement data from an air pressure sensor.

3. Method according to claim 1 or 2,
**characterized in that**
weather data for the current position of the vehicle are received via a first interface (3) and the environment data comprise these weather data.

4. Method according to any of the preceding claims,
**characterized in that**
external data from other road users or traffic infrastructure are received via a second interface (4) and the environment data comprise these external data.

5. Method according to any of the preceding claims,
**characterized in that**
the driver's operating actions are recorded and
a set of parameters for the method of the machine learning process are trained using the recorded operating actions and the environment data on the basis of which the control signal is generated.

6. Method according to claim 5,
**characterized in that,**
when training a set of parameters for the machine learning process, an evaluation for switching on the front fog light generated using the machine learning process is compared with an evaluation generated using external data from other road users or the traffic infrastructure.

7. Device for controlling a fog light system of a vehicle, which comprises a rear fog light (8) and a front fog light (9), having
sensors (1) for capturing environment data from the surroundings of the vehicle and a determination unit (2) which is configured to determine, using the environment data, whether the visibility is below a threshold value, whether there is fog in the surroundings of the vehicle, whether it is raining or snowing in the surroundings of the vehicle, and whether the brightness in the surroundings of the vehicle is below a brightness threshold value for darkness,
**characterized in that**
the device comprises a control unit (3) which is configured to generate a first control signal for switching on a light source of the rear fog light (8) of the fog light system only if it has been determined that the visibility is below the threshold value and there is fog in the surroundings of the vehicle, a second control signal for switching on the light sources of a driving light (10, 11) is generated if it has been determined that there is fog in the surroundings of the vehicle and if it has further been determined that the brightness in the surroundings of the vehicle is above the brightness threshold value, and to generate a third control signal for switching on the light source of the front fog light (9) of the fog light system if it has been determined that there is fog in the surroundings of the vehicle, or that it is raining or that it is snowing, and if it has further been determined that the brightness in the surroundings of the vehicle is below the brightness threshold value, and
the determination unit (2) was trained using a machine learning process.

## Revendications

1. Procédé de commande d'un système de feux antibrouillard d'un véhicule, qui comprend un feu antibrouillard arrière (8) et un feu antibrouillard avant (9), dans lequel des données d'environnement de l'environnement du véhicule sont acquises et, par le biais des données d'environnement, il est déterminé si la visibilité est inférieure à une valeur seuil, s'il y a du brouillard dans l'environnement du véhicule, s'il pleut ou s'il neige dans l'environnement du véhicule et si la luminosité dans l'environnement du véhicule est inférieure ou supérieure à une valeur seuil de luminosité pour l'obscurité,
**caractérisé en ce que**
lorsqu'il est déterminé s'il y a du brouillard dans l'environnement du véhicule, un procédé d'apprentissage automatique est utilisé, dans lequel on distingue si une faible distance de visibilité est due au brouillard ou à d'autres influences météorologiques,
un premier signal de commande est généré pour allumer une source lumineuse du feu antibrouillard arrière (8) du système de feux antibrouillard uniquement lorsqu'il a été déterminé que la visibilité est inférieure à la valeur seuil et qu'il y a du brouillard dans l'environnement du véhicule, lorsqu'il a été déterminé qu'il y a du brouillard dans l'environnement du véhicule et lorsqu'il a en outre été déterminé que la luminosité dans l'environnement du véhicule est supérieure à la valeur seuil de luminosité, un deuxième signal de commande est généré pour allumer les sources lumineuses d'un feu de route (10, 11), et,
lorsqu'il est déterminé qu'il y a du brouillard dans l'environnement du véhicule ou qu'il pleut ou qu'il neige, et lorsqu'il est en outre déterminé que la luminosité dans l'environnement du véhicule est inférieure à la valeur seuil de luminosité, un troisième signal de commande est généré pour allumer la source lumineuse du feu antibrouillard avant (9) du système de feux antibrouillard.

2. Procédé selon la revendication 1,
**caractérisé en ce que**
les données d'environnement comprennent des données d'image d'une caméra, des données de mesure d'un capteur LIDAR, des données de mesure d'un capteur radar, des données de mesure d'un capteur à ultrasons, des données de mesure d'un capteur de pluie, des données de mesure d'un capteur de lumière, des données de mesure d'un capteur de température, des données de mesure d'un hygromètre et/ou des données de mesure d'un capteur de pression atmosphérique.

3. Procédé selon la revendication 1 ou 2,
**caractérisé en ce que**
des données météorologiques pour la position actuelle du véhicule sont reçues par l'intermédiaire d'une première interface (3) et les données d'environnement comprennent ces données météorologiques.

4. Procédé selon l'une des revendications précédentes,
**caractérisé en ce que**
des données externes d'autres usagers de la route ou d'une infrastructure routière sont reçues par l'intermédiaire d'une seconde interface (4) et les données d'environnement comprennent ces données externes.

5. Procédé selon l'une des revendications précédentes,
**caractérisé en ce que**
des actions de manipulation du conducteur sont acquises et un jeu de paramètres pour le procédé d'apprentissage automatique est entraîné par le biais des actions de commande acquises et des données d'environnement, sur la base desquelles le signal de commande est généré.

6. Procédé selon la revendication 5,
**caractérisé en ce que**
lors de l'entraînement d'un jeu de paramètres pour le procédé d'apprentissage automatique, une évaluation générée par le biais du procédé d'apprentissage automatique pour allumer le feu antibrouillard avant est comparée à une évaluation qui a été générée par le biais des données externes des autres usagers de la route ou de l'infrastructure routière.

7. Dispositif de commande d'un système de feux antibrouillard d'un véhicule, qui comprend un feu antibrouillard arrière (8) et un feu antibrouillard avant (9), comportant
des capteurs (1) pour l'acquisition de données d'environnement de l'environnement du véhicule et une unité de détermination (2) qui est conçue pour déterminer, par le biais des données d'environnement, si la visibilité est inférieure à une valeur seuil, s'il y a du brouillard dans l'environnement du véhicule, s'il pleut ou s'il neige dans l'environnement du véhicule et si la luminosité dans l'environnement du véhicule est inférieure à une valeur seuil de luminosité pour l'obscurité,
**caractérisé en ce que**
le dispositif présente une unité de commande (3) qui est conçue pour générer un premier signal de commande pour allumer une source lumineuse du feu antibrouillard arrière (8) du système de feux antibrouillard uniquement lorsqu'il a été déterminé que la visibilité est inférieure à la valeur seuil et qu'il y a du brouillard dans l'environnement du véhicule, lorsqu'il a été déterminé qu'il y a du brouillard dans l'environnement du véhicule et lorsqu'il a en outre été déterminé que la luminosité dans l'environnement du véhicule est supérieure à la valeur seuil de luminosité, un deuxième signal de commande est généré pour allumer les sources lumineuses d'un feu de route (10, 11) et, lorsqu'il a été déterminé qu'il y a du brouillard dans l'environnement du véhicule ou qu'il pleut ou qu'il neige, et lorsqu'il a en outre été déterminé que la luminosité dans l'environnement du véhicule est inférieure à la valeur seuil de luminosité, un troisième signal de commande est généré pour allumer la source lumineuse du feu antibrouillard avant (9) du système de feux antibrouillard, et
l'unité de détermination (2) a été entraînée par le biais d'un procédé d'apprentissage automatique.
